Europäisches Patentamt

(19) European Patent Office

Office européen des brevets

(11) Publication number: **0 437 324 A2**

## (12) EUROPEAN PATENT APPLICATION

(21) Application number: **91300059.2**

(22) Date of filing: **04.01.91**

(51) Int. Cl.⁵: **C04B 7/36, C04B 7/52**

(30) Priority: **09.01.90 JP 2320/90**
**09.01.90 JP 2321/90**
**09.01.90 JP 2322/90**
**09.01.90 JP 2323/90**

(43) Date of publication of application:
**17.07.91 Bulletin 91/29**

(84) Designated Contracting States:
**DE FR GB**

(71) Applicant: **SHIMIZU CONSTRUCTION CO.,
LTD.**
**2-16-1, Kyobashi Chuo-ku**
**Tokyo 104 (JP)**

(72) Inventor: **Suzuki, Nobuo**
**c/o Shimizu Construction Co.,Ltd, 2-16-1
Kyobashi**
**Chuo-ku, Tokyo 104 (JP)**
Inventor: **Tanaka, Isao**
**c/o Shimizu Construction Co.,Ltd, 2-16-1
Kyobashi**
**Chuo-ku, Tokyo 104 (JP)**
Inventor: **Takeshi, Takao**
**c/o Shimizu Construction Co.,Ltd, 2-16-1
Kyobashi**
**Chuo-ku, Tokyo 104 (JP)**

(74) Representative: **Diamond, Bryan Clive et al**
**Gee & Co., Chancery House, Chancery Lane**
**London WC2A 1QU (GB)**

(54) **Cement and production thereof and concrete made therefrom.**

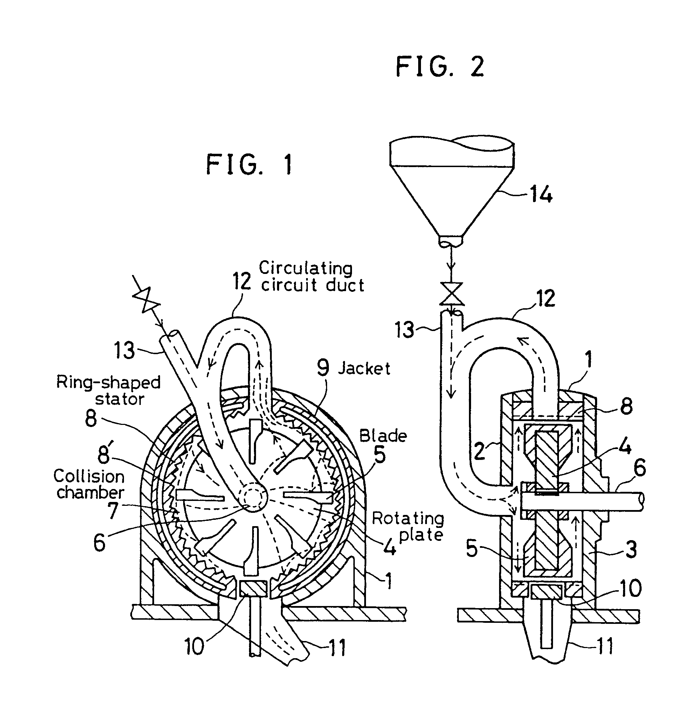

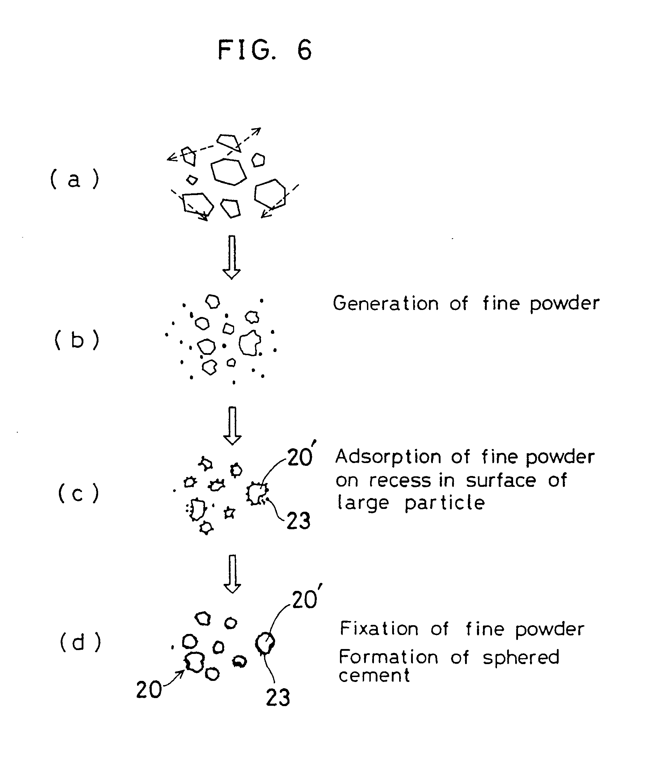

(57)    Spherical cement particles are produced by (a) grinding cement clinker particles by a high speed impact treatment in apparatus of Fig. 1 wherein the particles are rotated and scattered by blades on a rotating plate and multiply impacted until (Fig. 6) the particles are spherical, or (b) by mechanochemical surface fusion.

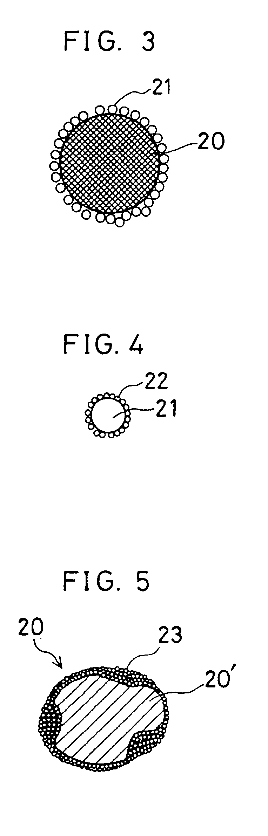

The sphered cement may be encapsulated (Fig. 3) by attaching fine cement powder, silica-fume or other powder to its surface.

These sphered particles preferably have at least 60 wt% thereof of diameter 3.9 to 30 μm.

Before the particles have been completely sphered, the powder formed therefrom can be attached (Fig. 5) to fill the recesses in the particles, thus rounding them.

Alternatively (Fig. 4), silica fume particles are coated with ultrafine particles of cement clinker.

Cement mortar is made from the cements, or low-hydration concrete using the sphered cement, aggregate and water in a proportion of 1 :2.5 to 8.0 :0.17 to 0.75. The resultant cured concrete is of high strength.

EP 0 437 324 A2

# CEMENT AND PRODUCTION THEREOF AND CONCRETE MADE THEREFROM

The present invention relates to cement products and a method of producing the same, and a composition for producing a cement product, as well as a mass concrete and a method of producing the same. More particularly, the present invention relates to a high-strength sphered cement product and a method of producing the same, and a composition for producing a high-strength cement product, as well as a low-hydration heat mass concrete and a method of producing the same.

Heretofore, using various kinds of cement, a variety of concretes have been produced, including :

## (1) Super-plasticized concrete

This is produced by adding a fluidizing agent to ordinary ready-mixed concrete when produced or used at the construction site. It is used to improve the workability and quality of the concrete.

However, since the viscosity of the resultant cement paste becomes very much lower the aggregate and the cement paste separate from each other, so that a homogeneous concrete product is not obtained.

Although attempts have been made to maintain the required viscosity by adding a thickener, the concrete thus produced is inferior in stability and it is also difficult to conduct quality control in its compounding and mixing.

## (2) Concrete contain a water-reducing agent

This is produced by adding a high-performance water-reducing agent to ordinary ready-mixed concrete. The water-reducing agent is used to lower the water-cement ratio to obtain a high-strength concrete product or a highly durable concrete product.

However, since the water content is reduced to an extremely low level, non-hydrated cement is locally present, and it is therefore difficult to obtain a homogeneous product. A large slump loss is another disadvantage of this concrete.

## (3) Super-setting retardation concrete

This is produced by adding a super-setting retarder to ordinary ready-mixed concrete. Utilizing the super-retardation of set, this concrete is used to suppress the occurrence of cold joint, lower the slump loss, reduce the heat of hydration and eliminate the need for work at night, which would otherwise accompany continuous placing of concrete. However, since the period of time during which the strength of the concrete is developed varies with environmental conditions, control thereof is difficult.

## (4) Super-high-strength concrete

This is produced with the water-cement ratio reduced to a low level and by adding a fluidizing agent and a high-performance water reducing agent and is used, e.g., for the construction of skyscrapers and nuclear power plants.

The use of silica fume as an admixture is under investigation. However, this concrete is still far from a practical application as ready-mixed concrete because of large variations in the strength, slump, slump flow, etc.

## (5) Mass concrete (bulk concrete) containing coarse aggregate

This is used for the construction of large-sized buildings and civil engineering structures (e.g., skyscrapers, dams, nuclear power plants, etc.).

It is, however, impossible to control the temperature that is generated by the heat of the hydration of the cement, and this may give rise to problems, for example, a lowering in the strength or cracking of the concrete.

More specifically, mass concrete is used in the form of large masses to construct large-sized buildings and civil engineering structures, for example, skyscrapers, dams or nuclear power plants. Mass concrete is generally defined such that the minimum dimension of the cross-section of a mass concrete member is not smaller than 80 cm and the difference between the highest temperature inside the concrete due to the heat of hydration and the ambient atmospheric temperature is 25°C or higher.

Since the hydration of cement is a chemical reaction that is accompanied by heat generation, the temperature of the concrete is raised in the hardening process. The rise in the temperature has an effect on the development of the strength and various other properties of the concrete. Since it is impossible to control the temperature rise, particularly in mass concrete, problems such as a lowering in the strength and cracking are likely to occur therein.

Thus, it is likely that expansion cracks will develop in mass concrete due to the heat of hydration after the construction, and contraction cracks will also develop due to a drop in the temperature thereafter. The following measures have heretofore been taken to prevent the occurrence of cracking : (1) not to use high-early-strength cement ; (2) to use admixtures, for example, fly ash, or an air-entraining agent, which improve the workability of the concrete ; (3) to use materials which are as low in temperature as possible, except in winter ; (4) to keep the produced concrete out of the direct rays of the sun and minimize the rise in the temperature by sprinking water, for example ; and (5) to gradually lower the temperature after the concrete has reached the maximum temperature while minimizing the temperature difference between the inside and outside of the concrete.

None of these prior cements however, allow high-strength concrete to be obtained.

We have now succeeded in providing a composition for producing a cement product which has superior fluidity, a high-strength and high-durability, a mass concrete which generates low heat of hydration and develops high-strength, and a method which enables a high-strength cement product to be obtained particularly stably at all times by using a cement composition that has superior fluidity and enables casting and filling to be effected even more densely with a minimum required amount of cement.

The present invention provides a cement product which is obtained by curing a mixture of aggregate, water, and a spherical cement consisting essentially of cement clinker fine spherical particles the outer peripheral surface of which has been made spherical by grinding and/or fusion, preferably at least 60 wt% of the particles having a diameter of from 3.9 to 30.0 μm. The present invention also provides a method of producing a cement product by curing the above-described mixture, and further provides a composition for producing a cement product, namely the mixture described above.

In addition, the present invention provides a method of producing a low-hydration heat mass concrete by employing a mixture of aggregate, water, and a cement consisting essentially of cement clinker fine particles the outer peripheral surface of which has been made spherical by grinding and/or fusion ; and the mass concrete thus produced.

Further, the invention provides a cement for producing said low-hydration heat mass concrete, which comprises said cement consisting essentially of said spherical cement clinker fine particles, at least 60 wt% of the particles having said diameter of from 3.9 to 30.0 μm.

In addition, the present invention provides a method of producing a high-strength cement product by curing a mixture of aggregate, water, and a spherical particled cement consisting essentially of cement clinker fine particles the outer peripheral surface of which is made spherical by grinding and/or fusion, at least 80 wt% of the particles having a diamter of from 3.9 to 9.0 μm ; and the cement product thus produced.

The spherical cement particles preferably have the diameter of from 3.9 to 30.0 μm in order to give excellent fluidity to the resulting cement mortar or ready-mixed concrete, and it is preferable that at least 60 wt % of the shered cement used has a diameter within this range.

The spherical cement particles may be each homogenously covered with a coating of fine particles, for example, of fine cement, silica fume (fine powder) or fluidizing agent, etc. ; the coated cement particles become vigorously reactive or show a different surface reactivity and hence exhibit various advantageous effects. The reaction (e.g. pozzolanic reaction) of the cement with the coating can be uniformly carried out, so that it is possible to stabilize the quality (e.g., strength and slump) of the resulting concrete.

The sphered cement that is employed in the present invention may be obtained by grinding cement clinker fine particles into spherical particles by a high speed impact treatment method. Alternatively, the sphered cement may be obtained by sphering cement clinker fine particles by a mechanochemical surface fusion method.

The sphered cement may be an "encapsulated" sphered cement that is obtained by attaching fine cement powder, silica fume or other pulverized admixture (e.g., blast-furnace slag, fly ash, calcium sulfoalminate, or other pulverized water-reducing agent or retarder) to the surface of spherical cement particles. Such encapsulated cement is preferably produced by a known high speed impact treatment method (wherein fine particles of a material are subjected to a rotational impact caused by a high-speed air stream within an impact chamber that is defined by a ring-shaped space, thereby sphering the fine particles).

In regard to the encapsulated sphered cement thus obtained, it is also preferable that at least 60 wt% thereof has a diameter of from 3.9 to 30.0 μm, for the production of cement mortar or ready-mixed concrete, to provide a high-strength concrete product. If the diameter exceeds 30.0 μm, the filling property is reduced, and unreacted parts remain inside the sphered cement particles during the hydration reaction, which has an adverse effect on the development of strength. If the diameter is less than 3.9 μm, the proportion of fine powder increases and hence the aggregating property increases, so that no great improvement can be expected in the fluidity of mortar or ready-mixed concrete produced from such a sphered cement.

If the proportion of sphered cement that falls within the above-described particle diameter range is less than 60 wt% of the entire cement used, satisfactory fluidity cannot be given to a mortar paste or ready-mixed concrete produced from the sphered cement. "Satisfactory fluidity" means that the placing is readily carried out with a relatively low water-cement ratio, that is, with a relatively low water content, and since there is no excess of water, a high-strength mortar or concrete can be produced.

Cement is produced according to a typical conventional manufacturing method, by mixing together raw materials, that is, limestone, clay, silica rock and iron oxide in appropriate proportions, pulverizing the mixture, feeding the pulverized mixture through a preheater to a rotary kiln where it is calcined at a high temperature of about 1450°C to obtain cement clinker, which is then rapidly cooled in a cooler before being pulverized in a finishing mill (tube mill), thereby obtaining fine cement particles having a diameter of from 1 to 90 μm.

In the production of Portland cement, 3 to 5% of gypsum is added to the cement clinker in the step of pulverizing it in the finishing mill. In other words, the pulverized cement clinker has a particle diameter of not greater than 90 μm, but the fine particles of cement clinker have a square outer shape, although somewhat rounded off.

In the present invention, the cement clinker powder (fine particles) may be treated for several minutes in, for example, a commercially available high speed impact treatment apparatus (e.g., Nara-Hybridization system made by Nara Machine Co., Ltd.) to prepare sphered cement (spherical cement fine particles) having the outer peripheral surface further rounded off, and the resulting sphered cement is used as a compounding cement. To make a sphered cement product, it is necessary that at least 60 wt% of the sphered cement used has a diameter of from 3.9 to 30.0 μm, as stated above.

When cement clinker powder is subjected to a sphering treatment by the above-described high speed impact treatment apparatus, fine powder, which is produced at the beginning of the process as the result of angular portions of cement clinker particles being cut off, is adsorbed on recesses in the surface of approximately spherical cement clinker particles which have not yet been completely sphered but somewhat rounded off, in such a manner that the fine powder fills the recesses, thus forming sphered cement particles. As a result, the cement that is obtained by this treatment contains no fine cement particles (since fine cement particles are adsorbed mainly on the recesses in the surface of sphered cement particles). Thus, it is possible to obtain a sphered cement having a particle diameter within a predetermined range.

Generally speaking, fine cement causes a rapid catalytic reaction with water and sets quickly because of a relatively large specific surface area, but there is a lowering in the fluidity.

Ordinary cements, for example, ordinary Portland cement, have a considerably large specific surface area because the outer shape of the cement particles is cuboid or square, as described above, and fine powder also intermingles therewith. Accordingly, the area of contact with water is large and hence a setting reaction takes place rapidly. For this reason, the fluidity is inferior, and heat of hydration is rapidly generated. Therefore when mass concrete is placed using such ordinary cement, a large temperature difference occurs between the ambient atmospheric temperature and the concrete, which may cause cracking in the concrete.

In contrast, employment of the sphered cement according to the present invention eliminates such a problem : the sphered cement involves no rapid generation of hydration heat and hence enables prevention of the occurrence of cracking in placing of concrete. In addition, since the water-cement ratio can be lowered, for the same water content a mortar of the sphered cement has a much larger flow value than that of a mortar of ordinary Portland cement. For the same flow value, the former enables 10% or more reduction in the water content.

It is preferable that the sphered cement, aggregate and water should be mixed together in the ratios 1 :2.5 to 8.0 :0.17 to 0.75.

Further, the sphered cement is preferably comprised of approximately spherical cement particles which have many fine cement particles adsorptively fixed on recesses and projections on the surface thereof, particularly, in the recesses, so as to form spherical particles with minimal unevenness as a whole.

We have now succeeded in providing a high-strength and crack-free mass concrete product, which has heretofore been considered to be impossible to produce, by using the sphered cement of the type described above.

Experiments concerning the way in which the heat of hydration is generated when a cement mixture hardens have revealed that the rate of heat generation during a period of about 50 hours in a mixture of the sphered cement, aggregate and water is much smaller than in the case of a mixture of ordinary Portland cement, aggregate and water, and in regard to the integrated calorific value, the mixture containing the sphered cement is about 1/4 lower than the mixture containing ordinary Portland cement at the time when about 72 hours has elapsed.

A product made from the mixture containing the sphered cement has a much higher strength than that of a product made from the mixture containing ordinary Portland cement.

The low-hydration heat mass concrete according to the present invention, comprises the sphered cement in a mass concrete composition

Although the reason why the calorific value of the hydration heat of a mixture containing the sphered cement lowers is not clear, it is considered that, since the specific surface area of sphered cement particles is much smaller than that of ordinary cement particles having many irregularities on the surface, the surface area of contact with water reduces and, as a result, the generation of hydration heat is suppressed.

It should be noted that the above-described sphered cement may be obtained by sphering fine cement particles by a mechanochemical surface fusion method.

When the cement used in one wherein the cement particles have been coated with finer particles ("encapsulated"), of another powder (additive) or mixture, the reaction of the cement with the additive or the admixture can be performed uniformly, and it is therefore possible to stabilize the quality (strength, slump, etc.) of the resulting concrete.

In order to obtain a high-strength cement product particularly stable at all times by using a cement composition which has excellent fluidity and enables casting and filling to be effected even more densely with a minimum required amount of cement, it is preferable that at least 80 wt% of the sphered cement used has a diameter of from 3.9 to 9.0 $\mu m$, particularly preferably, from 5.0 to 7.0 $\mu m$.

According to experiments, $3CaO \cdot SiO_2$ particles, which constitute the main component of cement, participate in the hydration reaction only to a depth of about 3.5 $\mu m$ from the surface thereof even at the age of 6 months.

In other words, in the case of a cement particle with a diameter of 35 $\mu m$, about 70% thereof is left unreacted in the form of core. Thus, coarse particles are not effective for the development of strength.

Thus, in order to obtain the above-described high-strength cement product stably at all time, it is preferable to use a sphered cement having a diameter of from 3.9 to 9.0 $\mu m$, particularly preferably from 5.0 to 7.0 $\mu m$.

With such a sphered cement, the hydration of cement is accomplished not only at the whole surface portion but also at the central core part, so that a high strength cement product can be obtained particularly stably. In addition, since the fluidity can be maintained at a high level with the water-cement ratio being lowered, it becomes possible to produce a high-strength cement product particularly stably.

In the accompanying drawings :

Fig. 1 is a sectional front view of a high speed impact treatment apparatus used in making spherical cement in one embodiment of the present invention ;

Fig. 2 is a sectional side view of the apparatus shown in Fig. 1 ;

Fig. 3 is a sectional view of a spherical cement fine particle having silica fume particles attached to its surface ;

Fig. 4 is a sectional view of a silica fume particle having cement ultrafine particles attached to its surface ;

Fig. 5 is a sectional view of a spherical cement particle obtained by a treatment carried out in the high speed impact treatment apparatus of Fig. 1;

Figs. 6(a) to 6(d) schematically show a process in which cement clinker is ground and formed into spherical cement ;

Fig. 7 is a graph showing the results of a flow test on a mortar containing a spherical cement according to the invention and a mortar containing ordinary Portland cement ;

Fig. 8 is a graph showing the rate of heat generation inside a spherical cement mixture and an ordinary Portland cement mixture at various ages ;

Fig. 9 is a graph showing the integrated calorific value of a spherical cement mixture and an ordinary Portland cement mixture at various ages ; and

Fig. 10 is a graph showing the compressive strength at various ages of a spherical cement mixture and an ordinary Portland cement mixture each hardened to a mass concrete product.

## EXAMPLES

The invention will now be further described with reference to the drawings and by the following Examples.

Figs. 1 and 2 show the structure of the essential part of a high speed impact treatment apparatus.

Fig. 1 is a sectional front view of the impact treatment apparatus, and Fig. 2 is a sectional side view thereof ; Reference numeral 1 denotes a casing, 2 a front cover, 3 a rear cover, 4 a rotating plate, 5 blades, 6 a rotating shaft, 7 a ring-shaped impact chamber, 8 a ring-shaped stator, 9 a jacket, 10 a sphered cement discharge valve, 11 a sphered cement discharge chute, 12 a circulating circuit duct, 13 a supply chute for fine cement particles as a raw material, and 14 a hopper for feeding cement to chute 13.

In use, cement from the hopper 14 is supplied as a raw material to the ring-shaped impact chamber 7 through the cement chute 13. Fine particles of cement are subjected to a rotational impact in an impact chamber that is defined by a ring-shaped space, thereby making the particles spherical.

In the impact chamber 7, the fine cement particles are rotated and scattered at high speed by the rotation of the rotating plate 4 and the blades 5 attached thereto. While rotating, the fine cement particles collide against the blades 5 and the surface of a large number of triangular grooves 8', which are provided in the surface of the ring-shaped stator 8.

The colliding cement particles enter the circulating circuit duct 12 that opens at one end thereof into the collision chamber 7, and after circulating through the duct 12, the cement particles are introduced into the collision chamber 7 again from the other end opening of the duct 12.

In this way, the cement particles are subjected to the rotational impact a multiplicity of times in response to the rotation of the rotating plate 4 until the desired spherical shape is obtained.

In general, the number of revolutions of the rotating plate 4 is from 4,000 to 16,000 rpm, and the processing time is from 3 to 20 minutes.

After the completion of the operation, the discharge valve 10 is lowered so as to be open, thereby the sphered cement particles being taken out from the chute 11.

Additionally if desired, a surface treatment of the sphered cement, for example, coating of a chemical admixture, can be homogeneously and reliably effected by introducing a cooling or heating medium to the inside of the jacket 9, so as to cause the fine cement particles to have their outer peripheral surface further rounded off.

Fig. 6 schematically shows a process in which cement clinker is ground and formed into spherical cement. In the step shown in Fig. 6(a) polyhedroid cement clinker particles are cast into the apparatus of Figs. 1 - 2, and angular portions of the cement clinker particles are cut off so as to generate fine powder in the step shown in Fig. 6(b).

In the step shown in Fig. 6(c), the rounded cement clinker particles come into sliding contact with the surface of the ring-shaped stator while rotating in the appratus. During this process, fine powder is adsorbed on the surface of the rounded cement clinker particles, particularly into recesses in the surface thereof, in such a manner as to fill the recesses. As a result of the continuation of this process, much fine cement clinker powder 23 is adsorbed on the surface of rounded cement fine particle bodies 20', particularly into recesses in the surface thereof, thus forming sphered cement particles 20 having the recesses filled with the fine cement clinker powder 23, as shown in Fig. 6(d).

Example 1

Cement clinker fine particles with a diameter of from 1 to 90 μm, which are led out from a finishing mill (tube mill) in the conventional cement manufacturing process, are supplied to a Nara Hybridizer (trade name ; manufactured by Nara Machine Co., Ltd), which is a commercially available high speed impact treatment apparatus, and processed therein for 3 to 20 minutes to produce spherical cement particles, wherein fine cement clinker powder 23 is adsorptively fixed in recesses in the surface layer of each approximately spherical cement particle body 20' to form a composite cement particle which as a whole is nearly spherical, as shown in section in Fig. 5. Since such composite cement particles have fine cement powder which compacted in the recesses of the central cement particles, the composite cement has a considerably uniform and narrow particle size distribution.

The substantially spherical cement particles may be made by various other known methods and apparatus, for example, a mechanochemical surface fusion method that employs an Angmill (trade name for an improved model of mechanical dry pulverizer, manufactured by Hosokawa Micron K.K., Japan), or a Cryptron System (trade name for an improved model of mechanical pulverizer, manufactured by Kawasaki Heavy Industry Co., Ltd, Japan).

The sphered cement that is obtained by the above-described sphering process has a particle diameter of from 1 to 30 μm and also has a homogeneous spherical surface. Accordingly, it exhibits an excellent bearing effect and considerably high fluidity and provides superior workability. As a result, a cement paste containing the sphered cement exhibits superior fluidity and castability. The use of this sphered cement for self-levelling concrete is very effective because it gives excellent fluidity to the resulting concrete.

In another embodiment, an additive (chemical admixture) or an admixture may be uniformly attached to the surface of the sphered cement particles. For example, 5 to 30% of silica fume may be added to cement particles which have been sphered by high speed impact treatment method. This is seen in section in Fig. 3 ; a layer of silica fume ultrafine particles 21 is attached all over the spherical surface of each sphered cement particle 20 to form an encapsulated sphered cement particle. The term "fume" refers to particles of size 0.1-1.0 μm diameter resulting from a chemical process.

The encapsulated sphered cement enables a uniform reaction (pozzolanic reaction) of the cement with the silica fumes, so that it is possible to stabilize the quality (strength, slump, etc.) of high-strength concrete mixed with silica fume, which has heretofore given rise to a problem. The use of such encapsulated sphered cement enables reliable and easy control of the hydration reaction.

Fig. 4 shows a cement composite material which comprises a silica fume particle 21 as a central or mother particle and cement clinker ultrafine particles 22 as peripheral or child particles.

In the embodiments of Figs. 3, 4 and 5, the ranges of the preferred diameters of the cement particles is as follows :

 (a) the diameter of particle 21 ; 1/10 to 1/100 of one of the central particle 20 ;

 (b) the diameter of particle 22 ; 1/10 to 1/100 of one of the daughter particle 21.

The cement composite material, which comprises ultrafine cement particles, enables a uniform reaction of the cement with the silica fume and therefore makes it possible to produce an ultrahigh-strength concrete. It should be noted that cement clinker in the form of ultrafine particles, which is used for this purpose, can be obtained as a by-product of the production of sphered cement clinker fine particles by the high speed impact treatment apparatus, by further classifying the remaining fine particles after the classification of the sphered cement clinker particles.

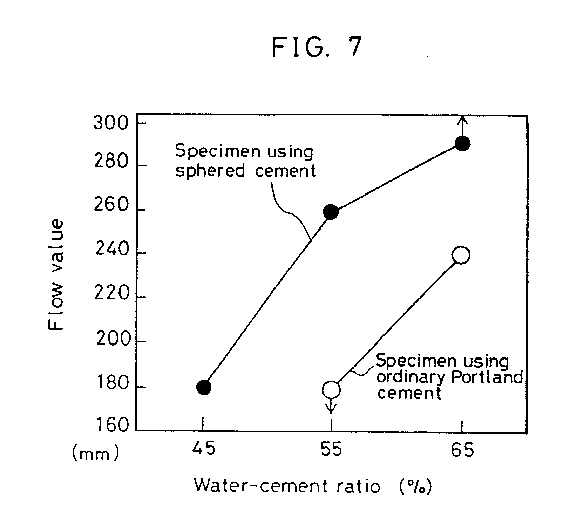

Fig. 7 shows the results of a comparative experiment on the fluidity (flow value) of a mortar containing a sphered cement according to the present invention and a mortar containing a conventional sphered cement according to the present invention and a mortar containing conventional Portland cement (not containing any sphered cement).

The sphered cement used in this experiment was produced by the high speed impact treatment method, 77.1 wt% of the sphered cement having a diameter of from 3.9 to 30.0 μm (average particle diameter : 11.34 μm). The specimens were prepared according to the testing method specified in JIS R 5201, with the water-cement ratio being variously changed, and the flow test was then conducted thereon.

It will be understood from the results shown in Fig. 7 that the fluidity of the mortar using the sphered cement of the present invention is much higher than that of the mortar using Portland cement, that is, for the same water content, the former shows a higher flow value (fluidity), and for the same flow value, the former enables a 10% or more reduction in the water content.

As a result, it is possible to place mortar, ready-mixed concrete, etc. with excellent fluidity even if the water content is low, and hence possible to provide a high-strength cement product.

## Example 2

A specific example of low-hydration heat mass concrete according to the present invention is now given.

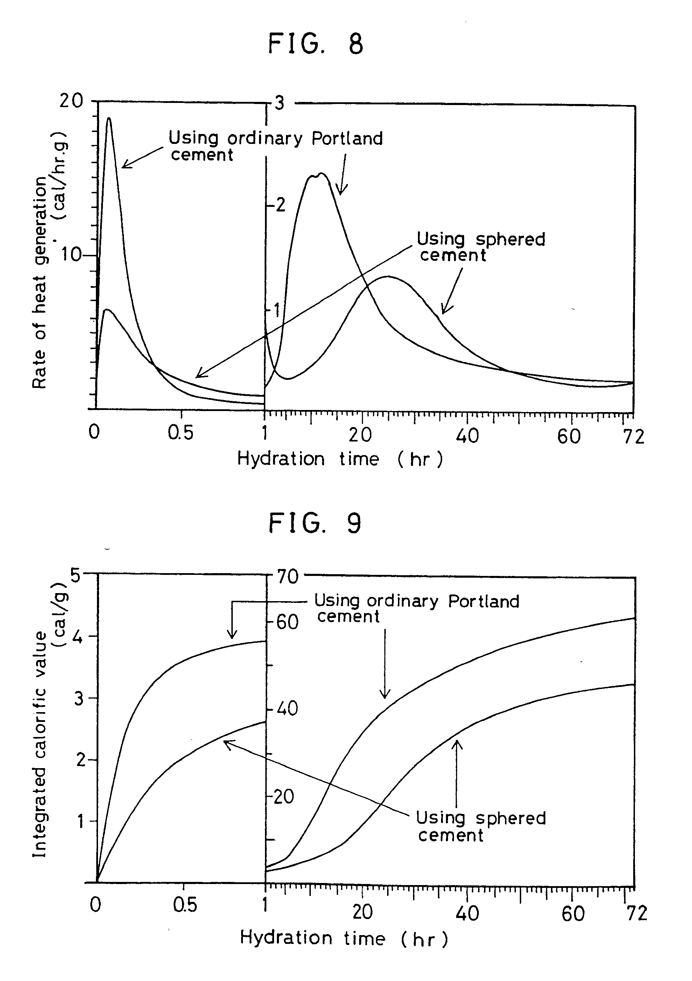

With a microcalorimeter (manufactured by Reska K.K.), the initial hydration characteristics were examined in regard to a mixture consisting essentially of 1 part by weight of sphered cement produced by the high speed impact treatment apparatus, at least 60 wt% of the sphered cement having a diameter of from 3.9 to 30.0 μm, and 0.4 parts by weight of water. The ambient atmospheric temperature during this experiment was 20°C. The rate of generation of cement hydration heat and the integrated calorific value were measured at each hydration time. The results of the measurement are shown in Figs. 8 and 9. The calorific value of the mixture containing the sphered cement was lower than that of the mixture containing ordinary Portland cement, i.e., the former was about 75% of the latter.

Results showing the same heat generation characteristics were obtained also in an experiment on the placing of mass concrete on site.

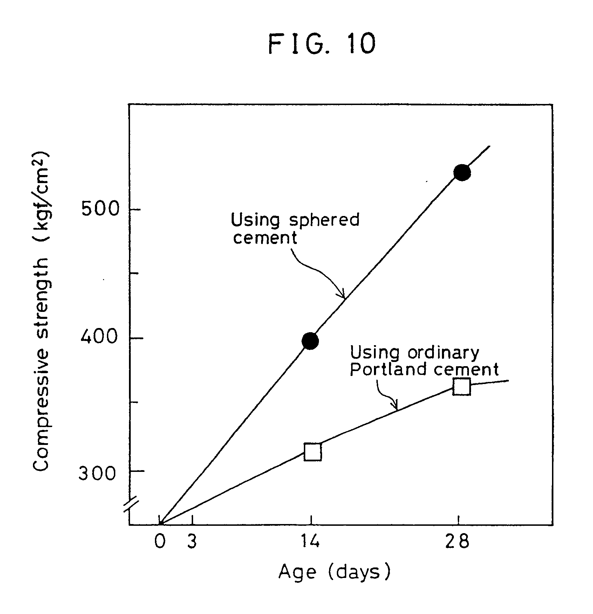

Fig. 10 shows the compressive strength of mass concrete products at each age.

These results reveal that, when the sphered cement is used, there is no rapid generation of hydration heat, and the integrated calorific value during a period of 72 hours is about 75% of that in the case of the mixture using ordinary Portland cement. Thus, the sphered cement enables a great reduction in the integrated calorific value.

As a result, no crack was seen in the concrete product using the sphered cement of the present invention, whereas many cracks were developed in the concrete product using ordinary Portland cement.

It will also be understood that a mass concrete product made from the sphered cement of the present invention has superior strength.

## Example 3

A high-strength cement product was made from the sphered cement of the present invention as follows.

One part by weight of sphered cement 80 wt% of which had a diameter of from 5 to 7 μm, 2 parts by weight of sand and 0.55 parts by weight of water were mixed together. The flow value of the resultant mixture was 260 mm.

The mixture was cured in a formwork. After 7 days, its compressive strength was 300 kgf/cm$^2$, and after 28 days, it was 558 kgf/cm$^2$. The results show that the compressive strength was increased by 27% in comparison to a concrete product using ordinary Portland cement.

To obtain the same compressive strength as that of concrete using ordinary Portland cement, the sphered cement required only about 50 to 86% of the water content needed for the ordinary Portland cement.

As has been described above, the sphered cement according to the present invention comprises spherical fine particles with a homogeneous spherical surface and therefore exhibits an excellent bearing effect and is capable of giving considerably high fluidity to a mixture containing the sphered cement, thus providing a mixture of good workability.

Accordingly, a composition for producing a cement product, which contains the sphered cement, has superior fluidity and therefore facilitates casting and is particularly advantageously used for self-levelling concrete.

In addition, since the sphered cement enables casting and filling to be effected even more densely, it is possible to produce a high-strength concrete product.

Further, the sphered cement of the present invention may have an admixture uniformly attached to the surface of the cement particles, and this cement structure enables the reaction with the admixture to proceed uniformly and completely. It is therefore possible to provide a cement product which has a uniform structure and excellent characteristics.

In addition, the present invention enables production of mass concrete which involves no rapid generation of hydration heat and which is therefore free from cracks and exhibits superior strength.

Since the present invention enables the hydration reaction of the cement to be thoroughly accomplished, a high-strength cement product can be produced stably at all times with a minimum required amount of cement composition. In addition, since the flow value can be increased with the water-cement ratio being lowered, the excellent fluidity can be ensured and the castability is also improved.

## Claims

1. A cement for producing a low-hydration heat mass concrete, which comprises fine particles of cement clinker the outer peripheral surface of which has been made spherical by grinding and/or fusion.

2. A cement according to Claim 1, wherein many fine cement particles (23) are adsorptively fixed on recesses and projections on the surface of approximately spherical cement particles (20'), particularly on the recesses, thus forming spherical particles with minimal unevenness on the surface as a whole.

3. A cement as claimed in Claim 1 or 2, wherein at least 60 wt% of the particles have a diameter of from 3.9 to 30.0 μm.

4. A cement for producing a high-strength cement product, which consists essentially of cement clinker fine particles the outer peripheral surface of which has been made spherical by grinding and/or fusion, at least 80 wt% of the particles having a diameter of from 3.9 to 9.0 μm.

5. A cement according to Claim 4, wherein said sphered cement has a diameter of from 5 to 7 μm.

6. A cement according to any of Claims 1 to 6, wherein said spherical particles consist of spherical cement particles (20) the surface of which is covered by a pulverized admixture of smaller particles (21).

7. A composite cement material which comprises silica fume particles (21) each coated with ultrafine particles (22) of cement clinker.

8. A method according to Claim 7, which comprises grinding cement clinker fine particles into spherical particles by a high speed impact treatment.

9. A method according to Claim 7, which comprises grinding cement clinker fine particles into spherical particles by a mechanochemical surface fusion method.

10. A method of producing a cement according to Claim 6, wherein which comprises attaching particles of a pulverized admixture to the surface of spherical cement particles.

11. A concrete which is obtained by curing a mixture of aggregate, water and a cement as claimed in any of Claims 1 to 6.

12. A low-hydration heat mass concrete which is produced by curing a mixture of a cement as claimed in Claim 1, 2 or 3, and aggregate and water.

13. A concrete according to Claim 11 or 12 wherein said cement, aggregate and water are mixed together in the weight ratios of 1 :2.5 to 8.0 :0.17 to 0.75.

FIG. 2

FIG. 1

14

12 Circulating
circuit duct

13

9 Jacket

Ring-shaped
stator

8

8′

Collision
chamber

7

6

Blade

5

Rotating
plate

4

1

10

11

13

12

1

8

2

4

6

5

3

10

11

# FIG. 3

# FIG. 4

# FIG. 5

# FIG. 6

( a )

Generation of fine powder

( b )

20'  Adsorption of fine powder
on recess in surface of
large particle

( c )

23

20'

Fixation of fine powder
Formation of sphered
cement

( d )

20      23

# FIG. 7

# FIG. 8

# FIG. 9

# F I G. 10